# EUROPEAN PATENT SPECIFICATION

(11) **EP 2 306 048 B1**
(45) Date of publication and mention of the grant of the patent: **08.06.2016**
(21) Application number: 10011344.8
(22) Date of filing: 29.09.2010
(51) Int. Cl.: F16H 3/72, B60K 1/02, B60L 15/20

(54) **Electric drive system**
Elektrisches Antriebssystem
Système de propulsion électrique

(30) Priority: 01.10.2009 GB 0917236
(43) Date of publication of application: 06.04.2011
(73) Proprietor: Endean, Michael, Bruce, Farleigh, St. Martin Guernsey GY4 6EA (GB)
(72) Inventor: Moore, Adrian, Thatcham Berkshire RG19 4ZA (GB); Halley, Michael, Thatcham Berkshire RG19 4ZA (GB); Endean, Michael, Bruce, Farleigh, St. Martin Guernsey, GY4 6EA (GB)
(74) Representative: Raynor, Simon Mark

(56) References cited:
- EP-A2- 0 925 981
- WO-A1-2008/055580
- DE-B- 1 017 696
- US-A1- 2005 014 600

## Description

The present invention relates to an electric drive system for a vehicle.

It is possible to take a conventional road vehicle that is powered by an internal combustion engine (ICE), for example a passenger vehicle or delivery vehicle, and replace the ICE with an electric motor. This may provide a number of environmental benefits. However, as the electric motor will generally have a different operating speed range to the ICE, either the transmission system may require re-gearing or the electric motor may have to operate outside its normal power and efficiency range. As conventional transmission gearing is discrete (that is, it consists of a limited number of fixed gear ratios), the electric motor will be forced it deviate from its optimum operating range irrespective of the operating conditions, resulting in a loss of efficiency.

DE 1017696B and US2005/0014600A disclose drive systems comprising two motors combined via an epicyclic drive set.

A preferred objective of the invention is to provide an electric drive system that allows for optimum operating efficiency of the drive motor, and that permits efficient energy regeneration, within a wide range of drive speeds.

Preferably, the invention relates to an electric drive system that provides for maximum energy efficiency and that permits the regeneration of electric energy both when no drive output is required and also when recoverable energy is available, for example when a vehicle is slowing.

According to the invention there is provided an electric drive system for an electrically-powered vehicle, the electric drive system including an electric drive motor, an electric control motor, a drive output, a transmission system for transmitting drive from the drive motor and the control motor to the drive output and a control system for controlling operation of the drive motor and the control motor, wherein the transmission system includes an epicyclic gear set comprising a sun gear that is drivingly connected to the drive motor, a planet gear mounted on a planet gear carrier that is drivingly connected to the drive output, and a rotatable annulus that is drivingly connected to the control motor, wherein the control system is constructed and arranged to control operation of the drive system according to a first control process for providing forward drive to the vehicle, said first control process comprising operating the drive motor at a substantially uniform predetermined speed, and operating the control motor at a decreasing speed as the speed of the drive output increases, the speed of the drive output being related to the difference between the speed of the drive motor and the speed of the control motor.

The invention allows the drive motor to operate at an optimum speed in all operating conditions, thereby ensuring efficient operation.

Advantageously, at least one of the drive motor and the control motor is a motor/generator that can convert mechanical energy into electrical energy. This allows recoverable energy, for example in the form of kinetic energy, to be captured and stored as electrical energy for subsequent re-use.

Advantageously, the drive output includes a differential and an output drive shaft, wherein the planet gear carrier is drivingly connected to the output drive shaft via the differential.

Advantageously, the control system controls the flow of electricity between an electrical storage cell and the drive and control motors.

Preferably, the control system includes an input interface for receiving operator control signals.

Preferably, the control system is constructed and arranged to operate according to the first control process at low forward drive speeds and according to a second control process at higher forward drive speeds, wherein the second control process includes operating the drive motor at an increasing speed as the speed of the drive output increases.

Preferably, the second control process includes operating the control motor at a substantially constant low speed or a zero speed.

Advantageously, the control system is constructed and arranged to operate according to a third control process at reverse drive speeds, wherein the third control process includes operating the drive motor at an decreasing speed as the reverse speed of the drive output increases.

Advantageously, the third control process includes operating the control motor at a substantially constant speed.

According to another aspect of the invention there is provided a road vehicle including an electric drive system according to any one of the preceding statements of invention.

According to another aspect of the invention there is provided a method of controlling an electric drive system for an electrically-powered vehicle, the electric drive system including an electric drive motor, an electric control motor, a drive output and transmission system including an epicyclic gear set for transmitting drive from the drive motor and the control motor to the drive output, the epicyclic gear set comprising a sun gear that is drivingly connected to the drive motor, a planet gear mounted on a planet gear carrier that is drivingly connected to the drive output, and a rotatable annulus that is drivingly connected to the control motor, the method including a first control process for providing forward drive to the vehicle comprising operating the drive motor at a substantially uniform predetermined speed, and operating the control motor at a decreasing speed as the speed of the drive output increases, the speed of the drive output being related to the difference between the speed of the drive motor and the speed of the control motor.

Preferably, the method includes operating the drive system according to the first control process at low forward drive speeds and operating according to a second control process at higher forward drive speeds, wherein the second control process includes operating the drive motor at an increasing speed as the speed of the drive output increases.

Preferably, the second control process includes operating the control motor at a substantially constant low speed or a zero speed.

Advantageously, the method includes operating the drive system according to a third control process at reverse drive speeds, wherein the third control process includes operating the drive motor at an decreasing speed as the reverse speed of the drive output increases.

Advantageously, the third control process includes operating the control motor at a substantially constant speed,

An embodiment of the invention will now be desaibed by way of example with reference to the accompanying drawings, in which:
Figure 1 is a side view of an electric drive system showing schematically the main components and the layout of the drive system;
Figure 2 is a schematic diagram illustrating the main components of a control system for the electric drive system, and
Figure 3 is a graph illustrating typical drive motor, control motor and vehicle operating characteristics.

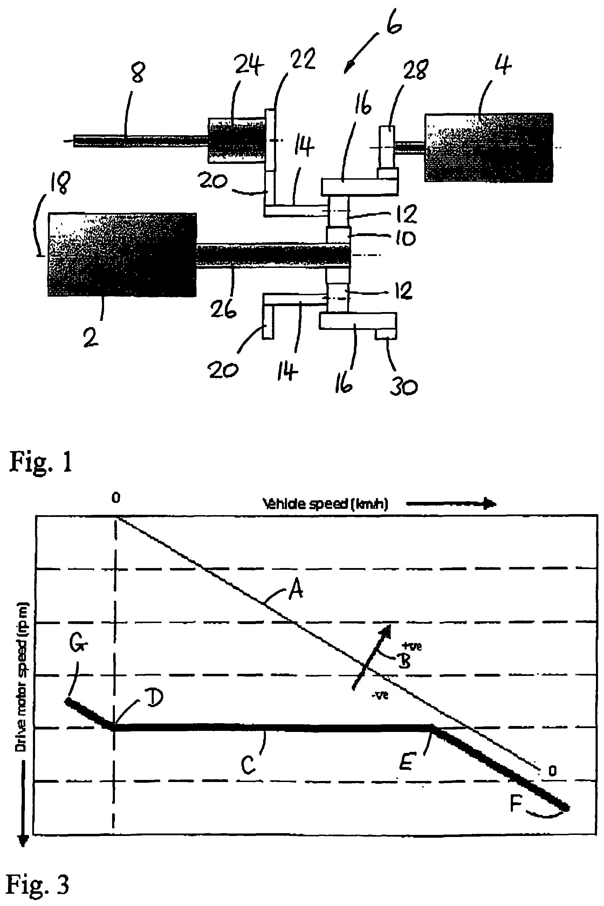

As shown in Figure 1, the electric drive system comprises a drive motor 2 and a control motor 4, which are connected via a transmission system 6 to a drive output shaft 8. Preferably, both the drive motor 2 and the control motor 4 are DC motor/generators that can be powered by electricity to produce mechanical drive, or that can be driven in reverse to convert mechanical energy into electrical energy.

In this example the transmission system 6 includes an epicyclic gear set comprising a sun gear 10, two planet gears 12 mounted on a rotatable planet gear carrier 14, and a rotatable annulus 16. The rotational axis of the sun gear 10 constitutes the main rotation axis 18 of the epicyclic gear set: the planet carrier 14 and the annulus 16 are both arranged to rotate coaxially about this main axis. The planet carrier 14 is connected via a gear set 20,22 and a differential unit 24 to the drive output shaft 8.

The sun gear 10 is connected directly to the shaft 26 of the drive motor 2, which in this example is the main drive motor (that is to say it is the more powerful of the drive motor and the control motor). However, it is possible to use two motors with a different power ratio.

Rotation of the sun gear 10 is controlled by the drive motor 2, which is connected to the sun gear 10 via the drive motor shaft 26. The sun gear 10 is drivingly connected through the planet gears 12 to the annulus 16. Rotation of the annulus 16 is controlled by the control motor 4, which carries on its drive shaft a drive gear 26 that engages an external gear 30 provided on the outer circumferential surface of the annulus 16.

Rotation of the planet carrier 14 is controlled via the planet gears 12 by relative rotation of the sun gear 10 and the annulus 16, which are in turn controlled respectively by the drive motor 2 and the control motor 4. For example, if the sun gear 10 and the annulus 16 are both stationary, then the planet carrier 14 will be stationary and there will be no output drive. If the sun gear 10 is rotated and the annulus 16 is held stationary, the planet carrier 14 will rotate in the same direction as the sun gear 10 but at a lower rotational speed, thus delivering drive to the output shaft 8. If the sun gear 10 and the annulus 16 are rotated in opposite directions, the planet carrier 14 will be rotated at a speed that depends on the relative rotational speeds of the sun gear and the annulus. It is thus possible to control both the speed and the torque of the drive delivered to the output shaft 8 by controlling the speeds of the drive motor 2 and the control motor 4.

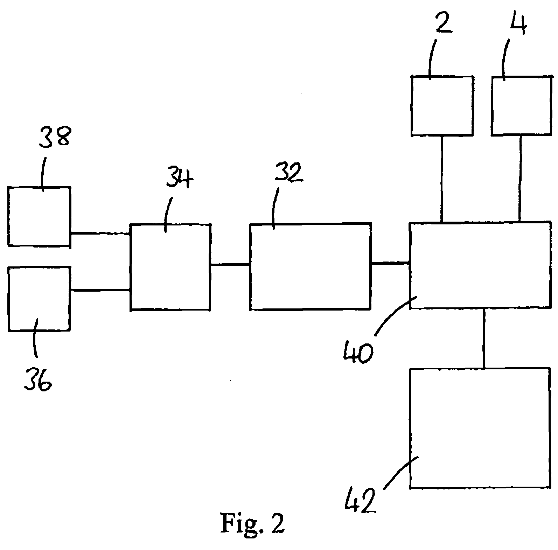

The drive motor 2 and the control motor 4 are both connected to a control system (for example an electronic control system), which controls the flow of electrical current to and from both motor/generators 2,4 according to the required drive output. An example of a control system for a vehicle drive system is illustrated schematically in Figure 2. The control system includes a main control unit 32, for example an electronic data processor, which is connected to receive input signals via an input interface 34 from the vehicle controls 36, for example the accelerator and brake pedals, and optionally from one or more vehicle sensors 38, for example from a speed sensor. The control unit 32 is also connected to a power control unit 40 that controls the flow of electrical energy between the drive and control motors 2,4 and one or more electrical storage cells 42.

The control system operates to control the flow of electrical energy between the electrical storage cells 42 and the drive and control motors 2,4 according to control signals received from the vehicle controls 36 and input signals received from the vehicle sensors 38. The general operating principle of the control system is to ensure energy efficient operation of the drive system. It does this by ensuring that when an output drive is required the drive motor operates at maximum efficiency for as long as possible, and when drive is not required any available recoverable energy is captured and stored by the system.

In particular, the control system considers the drive motor's efficiency range (within the speed domain), and the control motor's efficiency range with respect to regeneration. When the driver of a vehicle demands acceleration by pressing the vehicle accelerator pedal, the input signal from the pedal is converted into a drive motor current demand signal. The drive motor's current demand is controlled in such a way as to ensure that the epicyclic gear set is torque balanced for any required speed, thus allowing the drive motor 2 to operate in the optimum operating speed range, for maximum efficiency.

An example of the operating characteristics for the drive motor and control motor in a vehicle is shown graphically in Fig. 3. The horizontal axis of the graph represents the vehicle speed in km/h, with forward motion being represented on the right hand side of the graph and reverse motion being represented on the left hand side. The vertical axis represents the drive motor speed, this axis being inverted so that a zero drive motor speed is represented by the top line of the graph. The diagonal axis A is the control motor axis. The speed and drive direction of the control motor 4 is represented by the distance from this axis in a direction perpendicular thereto, as indicated by arrow B. Thus, the area above and to the right of the control motor axis A in the direction of arrow B represents a positive control motor speed, which adds to the vehicle speed provided by the drive motor 2. The area below and to the left of the control motor axis A represents a negative control motor speed, which subtracts from the vehicle speed provided by the drive motor 2, whilst increasing the drive torque.

A typical example of an operating curve for the drive motor 2 is represented by the thick line C. When the vehicle is stationary (at point D) control motor speed is negative and is matched to the speed of the drive motor 2 so that no drive is delivered to the vehicle. During forward motion up to a certain vehicle speed (represented by point E), the drive motor speed is constant and the negative speed of the control motor 4 gradually reduces towards (but not to) zero as the vehicle speed increases. When the vehicle speed increases beyond the speed represented by point E up to the maximum vehicle speed (point F), the control motor 4 maintains a constant small negative speed and the drive motor speed increases. When the vehicle is driven in reverse (between points D and G), the control motor 4 maintains a constant negative speed and the drive motor speed decreases so that the combined motors provide a reverse drive.

When the vehicle is stationary and about to launch into either forward or reverse motion, the rotational speed of the drive motor 2 is set to a value at which it operates with maximum efficiency. Because the vehicle is stationary and the planet gear carrier 14 is not rotating, drive is transmitted through the planet gears 12 and the annulus 16 into the control motor 4, which operates as a generator to recover some of the power developed by the drive motor 2.

In order to accelerate the vehicle, the control system sends a drive signal to the control motor 4 which causes it to resist the rotation of the annulus 16. As the rotational speed of the annulus decreases, a low speed, high torque drive is transmitted to the output shaft 8 via the planet carrier 14. Simultaneously, the current delivered to the drive motor 2 increases to maintain the speed of the drive motor at the optimum value for efficient operation. The power delivered to the drive motor 2 and the control motor 4 is controlled to provide an appropriate amount of torque, according to the position of the vehicle accelerator pedal.

As the speed of the vehicle increases, the speed of the control motor 4 gradually decreases enabling the drive motor 2 to maintain its optimum drive speed for as long as possible, for example for all vehicle speeds typical of an urban cycle (up to say about 50km/h). At higher vehicle speeds (above point E), the speed of the control motor 4 is held constant and the speed of the drive motor 2 starts to increase. At maximum vehicle speed, the control motor 4 operates at a very low negative speed, and drive is provided almost entirely by the drive motor 2.

When the vehicle decelerates, mechanical drive is transferred from the output shaft 8 via the epicyclic gear system to the drive motor 2 and/or the control motor 4, which converts the mechanical energy back into electrical energy. This electrical energy is stored in the electrical storage cells 42 for re-use.

The typical operating curve C shown in Fig. 3 represents only one example of how the system may by configured to operate. In this example, the control motor speed is always negative, so that it has the effect of slightly increasing the torque while reducing the vehicle speed as compared to the speed that would be provided by operating the drive motor on its own. Various modifications of this drive regime are however possible. For example, the system may be configured so that when the vehicle is travelling at high speeds, the control motor speed is zero so that drive is provided entirely by the drive motor. Alternatively, the system may be configured so that in certain circumstances (for example at high vehicle speeds), the direction of the control motor is reversed so that it provides a positive contribution to the vehicle speed. The configuration chosen in any particular situation will depend both on operating conditions and also on the relative powers and operating characteristics of the drive and control motors.

The drive system described above can be retrofitted into a vehicle previously powered by a conventional internal combustion engine by exchanging the standard transmission for the electric drive system, without the need to re-gear the transmission. It can also be fitted to new vehicles

## Claims

1. An electric drive system for an electrically-powered vehicle, the electric drive system including an electric drive motor (2), an electric control motor (4), a drive output (8); a transmission system (6) for transmitting drive from the drive motor (2) and the control motor (4) to the drive output and a control system for controlling operation of the drive motor and the control motor, wherein the transmission system includes an epicyclic gear set comprising a sun gear (10) that is drivingly connected to the drive motor (2), a planet gear (12) mounted on a planet gear cairier (14) that is drivingly connected to the drive output (8) and a rotatable annulus (16) that is drivingly connected to the control motor (4), wherein the control system is constructed and arranged to control operation of the drive system according to a first control process for providing forward drive to the vehicle, said first control process comprising operating the drive motor (2) at a substantially uniform predetermined speed, and operating the control motor (4) at a decreasing speed as the speed of the drive output increases, the speed of the drive output being related to the difference between the speed of the drive motor and the speed of the control motor.

2. An electric drive system according to claim 1, in which at least one of the drive motor (2) and the control motor (4) is a motor/generator that can convert mechanical energy into electrical energy.

3. An electric drive system according to claim 1 or claim 2, in which the drive output includes a differential (24) and an output drive shaft (8) wherein the planet gear (14) carrier is drivingly connected to the output drive shaft via the differential.

4. An electric drive system according to any one of the preceding claims, in which the control system controls the flow of electricity between an electrical storage cell and the drive and control motors.

5. An electric drive system according to any one of the preceding claims, in which the control system includes an input interface for receiving operator control signals.

6. An electric drive system according to any one of the preceding claims, in which the control system is constructed and arranged to operate according to the first control process at low forward drive speeds and according to a second control process at higher forward drive speeds wherein the second control process includes operating the drive motor (2) at an increasing speed as the speed of the drive output (8) increases.

7. An electric drive system according to claim 6, in which the second control process includes operating the control motor (4) at a substantially constant low speed or a zero speed.

8. An electric drive system according to claim 6 or claim 7, in which the control system is constructed and arranged to operate according to a third control process at reverse drive speeds, wherein the third control process includes operating the drive motor (2) at an decreasing speed as the reverse speed of the drive output (8) increases.

9. An electric drive system according to claim 8, in which the third control process includes operating the control motor (4) at a substantially constant speed.

10. A road vehicle including an electric drive system according to any one of the preceding claims.

11. A method of controlling an electric drive system for an electrically-powered vehicle, the electric drive system including an electric drive motor (2), an electric control motor (4), a drive output (8)and transmission system (6) including an epicyclic gear set for transmitting drive from the drive motor (2) and the control motor (4) to the drive output, the epicyclic gear set comprising a sun gear (10) that is drivingly connected to the drive motor (2), a planet gear (12) mounted on a planet gear carrier (14) that is drivingly connected to the drive output (8), and a rotatable annulus (16) that is drivingly connected to the control motor (4), the method including a first control process for providing forward drive to the vehicle comprising operating the drive motor (2) at a substantially uniform predetermined speed, and operating the control motor (4) at a decreasing speed as the speed of the drive output increases, the speed of the drive output being related to the difference between the speed of the drive motor and the speed of the control motor.

12. A method according to claim 11, including operating the drive system according to the first control process at low forward drive speeds and operating according to a second control process at higher forward drive speeds, wherein the second control process includes operating the drive motor (2) at an increasing speed as the speed of the drive output increases.

13. A method according to claim 12, in which the second control process includes operating the control motor (4) at a substantially constant low speed or a zero speed.

14. A method according to any one of claims 11 to 13, including operating the drive system according to a third control process at reverse drive speeds, wherein the third control process includes operating the drive motor (2) at an decreasing speed as the reverse speed of the drive output increases.

15. A method according to claim 14, in which the third control process includes operating the control motor (4) at a substantially constant speed.

## Patentansprüche

1. Elektroantriebssystem für ein Elektrofahrzeug, wobei das Elektroantriebssystem einen elektrischen Antriebsmotor (2), einen elektrischen Regelungsmotor (4), einen Abtrieb (8), ein Kraftübertragungssystem (6) zur Übertragung der Antriebskraft vom Antriebsmotor (2) und dem Regelungsmotor (4) auf den Abtrieb und ein Regelsystem zur Regelung des Betriebs des Antriebsmotors und des Regelungsmotors, wobei das Kraftübertragungssystem ein Umlaufrädergetriebe beinhaltet, das ein Sonnenrad (10), das trieblich mit dem Antriebsmotor (2) verbunden ist, ein Umlaufrad (12), das auf einem Umlaufradträger (14) montiert ist, der trieblich mit dem Abtrieb (8) verbunden ist, und ein drehbares Hohlrad (16), das trieblich mit dem Regelungsmotor (4) verbunden ist, aufweist, wobei das Regelsystem zur Regelung des Betriebs des Antriebssystems gemäß einem ersten Regelungsprozess zum Versorgen des Fahrzeugs mit Vorwärtsantriebskraft aufgebaut und angeordnet ist, wobei der genannte erste Regelungsprozess das Betreiben des Antriebsmotors (2) mit einer im Wesentlichen gleichförmigen vorbestimmten Drehzahl und das Betreiben des Regelungsmotors (4) bei zunehmender Drehzahl des Abtriebs mit einer abnehmenden Drehzahl aufweist, wobei die Drehzahl des Abtriebs mit der Differenz zwischen der Drehzahl des Antriebsmotors und der Drehzahl des Regelungsmotors in Bezug steht.

2. Elektroantriebssystem nach Anspruch 1, bei dem wenigstens einer von Antriebsmotor (2) und Regelungsmotor (4) ein Motor-Generator ist, der mechanische Energie in elektrische Energie umwandeln kann.

3. Elektroantriebssystem nach Anspruch 1 oder 2, bei dem der Abtrieb ein Differenzial (24) und eine Abtriebswelle (8) beinhaltet, wobei der Umlaufradträger (14) über das Differenzial trieblich mit der Abtriebswelle verbunden ist.

4. Elektroantriebssystem nach einem der vorhergehenden Ansprüche, bei dem das Regelungssystem den Elektrizitätsfluss zwischen einer elektrischen Speicherzelle und dem Antriebs- und dem Regelungsmotor regelt.

5. Elektroantriebssystem nach einem der vorhergehenden Ansprüche, bei dem das Regelsystem eine Eingabeschnittstelle zum Empfangen von Steuersignalen des Bedieners beinhaltet.

6. Elektroantriebssystem nach einem der vorhergehenden Ansprüche, bei dem das Regelsystem aufgebaut und angeordnet ist, um gemäß dem ersten Regelungsprozess mit niedrigen Vorwärtsantriebsdrehzahlen und gemäß einem zweiten Regelungsprozess mit höheren Vorwärtsantriebszahlen betrieben zu werden, wobei der zweite Regelungsprozess das Betreiben des Antriebsmotors (2) bei zunehmender Drehzahl des Abtriebs (8) mit einer zunehmenden Drehzahl beinhaltet.

7. Elektroantriebssystem nach Anspruch 6, bei dem der zweite Regelungsprozess das Betreiben des Regelungsmotors (4) mit einer im Wesentlichen konstanten niedrigen Drehzahl oder einer Null-Drehzahl beinhaltet.

8. Elektroantriebssystem nach Anspruch 6 oder Anspruch 7, bei dem das Regelsystem aufgebaut und angeordnet ist, um gemäß einem dritten Regelungsprozess mit Rückwärtsgangdrehzahlen betrieben zu werden, wobei der dritte Regelungsprozess das Betreiben des Antriebsmotors (2) bei zunehmender Rückwärtsdrehzahl des Abtriebs (8) mit einer abnehmenden Drehzahl beinhaltet.

9. Elektroantriebssystem nach Anspruch 8, bei dem der dritte Regelungsprozess das Betreiben des Regelungsmotors (4) mit einer im Wesentlichen konstanten Drehzahl beinhaltet.

10. Straßenfahrzeug mit einem Elektroantriebssystem nach einem der vorhergehenden Ansprüche.

11. Verfahren zum Regeln eines Elektroantriebssystems für ein Elektrofahrzeug, wobei das Elektroantriebssystem einen elektrischen Antriebsmotor (2), einen elektrischen Regelungsmotor (4), einen Abtrieb (8) und ein Kraftübertragungssystem (6) beinhaltet, das ein Umlaufrädergetriebe zur Übertragung der Antriebskraft vom Antriebsmotor (2) und dem Regelungsmotor (4) auf den Abtrieb beinhaltet, wobei das Umlaufrädergetriebe ein Sonnenrad (10), das trieblich mit dem Antriebsmotor (2) verbunden ist, ein Umlaufrad (12), das auf einem Umlaufradträger (14) montiert ist, der trieblich mit dem Abtrieb (8) verbunden ist, und ein drehbares Hohlrad (16), das trieblich mit dem Regelungsmotor (4) verbunden ist, aufweist, wobei das Verfahren einen ersten Regelungsprozess zum Versorgen des Fahrzeugs mit Vorwärtsantriebskraft beinhaltet, der das Betreiben des Antriebsmotors (2) mit einer im Wesentlichen gleichförmigen vorbestimmten Drehzahl und das Betreiben des Regelungsmotors (4) bei zunehmender Drehzahl des Abtriebs mit einer abnehmenden Drehzahl aufweist, wobei die Drehzahl des Abtriebs mit der Differenz zwischen der Drehzahl des Antriebsmotors und der Drehzahl des Regelungsmotors in Bezug steht.

12. Verfahren nach Anspruch 11, das das Betreiben des Antriebssystems gemäß dem ersten Regelungsprozess mit niedrigen Vorwärtsantriebsdrehzahlen und das Betreiben gemäß einem zweiten Regelungsprozess mit höheren Vorwärtsantriebsdrehzahlen beinhaltet, wobei der zweite Regelungsprozess das Betreiben des Antriebsmotors (2) bei zunehmender Drehzahl des Abtriebs mit einer zunehmenden Drehzahl beinhaltet.

13. Verfahren nach Anspruch 12, bei dem der zweite Regelungsprozess das Betreiben des Regelungsmotors (4) mit einer im Wesentlichen konstanten niedrigen Drehzahl oder einer Null-Drehzahl beinhaltet.

14. Verfahren nach einem der Ansprüche 11 bis 13, das das Betreiben des Antriebssystems gemäß einem dritten Regelungsprozess mit Rückwärtsgangdrehzahlen beinhaltet, wobei der dritte Regelungsprozess das Betreiben des Antriebsmotors (2) bei zunehmender Rückwärtsdrehzahl des Abtriebs mit einer abnehmenden Drehzahl beinhaltet.

15. Verfahren nach Anspruch 14, bei dem der dritte Regelungsprozess das Betreiben des Regelungsmotors (4) mit einer im Wesentlichen konstanten Drehzahl beinhaltet.

## Revendications

1. Système de propulsion électrique destiné à un véhicule électrique, le système de propulsion électrique comprenant un moteur de propulsion électrique (2), un moteur de commande électrique (4), une sortie de propulsion (8), un système de transmission (6) destiné à transmettre la propulsion du moteur de propulsion (2) et du moteur de commande (4) à la sortie de propulsion et un système de commande destiné à commander l'actionnement du moteur de propulsion et du moteur de commande, dans lequel le système de transmission comprend un ensemble épicyloïdal comprenant un planétaire (10) qui est relié par entraînement au moteur de propulsion (2), un satellite (12) monté sur un support de satellite (14) qui est relié par entraînement à la sortie de propulsion (8) et une couronne rotative (16) qui est reliée par entraînement au moteur de commande (4), dans lequel le système de commande est conçu et agencé pour commander l'actionnement du système de propulsion selon un premier processus de commande destiné à permettre la propulsion vers l'avant du véhicule, ledit premier processus de commande comprenant l'actionnement du moteur de propulsion (2) à une vitesse prédéterminée sensiblement uniforme, et l'actionnement du moteur de commande (4) à une vitesse décroissante à mesure que la vitesse de la sortie de propulsion augmente, la vitesse de la sortie de propulsion étant liée à la différence entre la vitesse du moteur de propulsion et la vitesse du moteur de commande.

2. Système de propulsion électrique selon la revendication 1, dans lequel au moins l'un du moteur de propulsion (2) et du moteur de commande (4) est un moteur/une génératrice qui peut convertir l'énergie mécanique en énergie électrique.

3. Système de propulsion électrique selon la revendication 1 ou la revendication 2, dans lequel la sortie de propulsion comprend un différentiel (24) et un arbre de sortie (8), dans lequel le support de satellite (14) est relié par entraînement à l'arbre de sortie par l'intermédiaire du différentiel.

4. Système de propulsion électrique selon l'une quelconque des revendications précédentes, dans lequel le système de commande commande le flux d'électricité entre un accumulateur électrique et les moteurs de propulsion et de commande.

5. Système de propulsion électrique selon l'une quelconque des revendications précédentes, dans lequel le système de commande comprend une interface d'entrée destinée à recevoir des signaux de commande d'opérateur.

6. Système de propulsion électrique selon l'une quelconque des revendications précédentes, dans lequel le système de commande est conçu et agencé pour fonctionner selon le premier processus de commande à de faibles vitesses de propulsion vers l'avant et selon un deuxième processus de commande à des vitesses supérieures de propulsion vers l'avant, dans lequel le deuxième processus de commande comprend l'actionnement du moteur de propulsion (2) à une vitesse croissante à mesure que la vitesse de la sortie de propulsion (8) augmente.

7. Système de propulsion électrique selon la revendication 6, dans lequel le deuxième processus de commande comprend l'actionnement du moteur de commande (4) à une faible vitesse sensiblement constante ou à une vitesse nulle.

8. Système de propulsion électrique selon la revendication 6 ou la revendication 7, dans lequel le système de commande est conçu et agencé pour fonctionner selon un troisième processus de commande à des vitesses de marche arrière, dans lequel le troisième processus de commande comprend l'actionnement du moteur de propulsion (2) à une vitesse décroissante à mesure que la vitesse de marche arrière de la sortie de propulsion (8) augmente.

9. Système de propulsion électrique selon la revendication 8, dans lequel le troisième processus de commande comprend l'actionnement du moteur de commande (4) à une vitesse sensiblement constante.

10. Véhicule routier comprenant un système de propulsion électrique selon l'une quelconque des revendications précédentes.

11. Procédé de commande d'un système de propulsion électrique destiné à un véhicule électrique, le système de propulsion électrique comprenant un moteur de propulsion électrique (2), un moteur de commande électrique (4), une sortie de propulsion (8) et un système de transmission (6) comprenant un ensemble épicyloïdal destiné transmettre la propulsion du moteur de propulsion (2) et du moteur de commande (4) à la sortie de propulsion, l'ensemble épicycloïdal comprenant un planétaire (10) qui est relié par entraînement au moteur de propulsion (2), un satellite (12) monté sur un support de satellite (14) qui est relié par entraînement à la sortie de propulsion (8) et une couronne rotative (16) qui est reliée par entraînement au moteur de commande (4), le procédé comprenant un premier processus de commande destiné à permettre la propulsion vers l'avant du véhicule, comprenant l'actionnement du moteur de propulsion (2) à une vitesse prédéterminée sensiblement uniforme, et l'actionnement du moteur de commande (4) à une vitesse décroissante à mesure que la vitesse de la sortie de propulsion augmente, la vitesse de la sortie de propulsion étant liée à la différence entre la vitesse du moteur de propulsion et la vitesse du moteur de commande.

12. Procédé selon la revendication 11, comprenant l'actionnement du système de propulsion selon le premier processus de commande à de faibles vitesses de propulsion vers l'avant et l'actionnement selon un deuxième processus de commande à des vitesses supérieures de propulsion vers l'avant, dans lequel le deuxième processus de commande comprend l'actionnement du moteur de propulsion (2) à une vitesse croissante à mesure que la vitesse de la sortie de propulsion augmente.

13. Procédé selon la revendication 12, dans lequel le deuxième processus de commande comprend l'actionnement du moteur de commande (4) à une faible vitesse sensiblement constante ou à une vitesse nulle.

14. Procédé selon l'une quelconque des revendications 11 à 13, comprenant l'actionnement du système de propulsion selon un troisième processus de commande à des vitesses de marche arrière, dans lequel le troisième processus de commande comprend l'actionnement du moteur de propulsion (2) à une vitesse décroissante à mesure que la vitesse de marche arrière de la sortie de propulsion augmente.

15. Procédé selon la revendication 14, dans lequel le troisième processus de commande comprend l'actionnement du moteur de commande (4) à une vitesse sensiblement constante.
